# EUROPÄISCHE PATENTANMELDUNG

(11) **EP 3 689 579 A1**
(43) Veröffentlichungstag der Anmeldung: **05.08.2020**
(21) Anmeldenummer: 19154170.5
(22) Anmeldetag: 29.01.2019
(51) Int. Cl.: B29C 64/118

(54) **VERFAHREN ZUM DREIDIMENSIONALEN AUFBRINGEN EINES MATERIALS MITTELS EINER DRUCKVORRICHTUNG UND DRUCKVORRICHTUNG ZUM DREIDIMENSIONALEN AUFBRINGEN EINES MATERIALS**

(71) Anmelder: Siemens Aktiengesellschaft, 80333 München (DE)
(72) Erfinder: Jähnicke, Jens, 09112 Chemnitz (DE); Schneider, Heinz-Ingo, 85598 Baldham (DE); Witter, Heinrich Nikolas, 91056 Erlangen (DE)

(57) **Zusammenfassung**

Die Erfindung betrifft ein Verfahren zum dreidimensionalen Aufbringen eines Materials mittels einer Druckvorrichtung (1), bei welchem das Material in einem Druckkopf (2) geschmolzen wird und das geschmolzene Material (4) aus einer Düse (7) ausgeben wird, wobei das geschmolzene Material (4) bei einer Bewegung des Druckkopfs (2) entlang einer Verfahrrichtung (V) als Strang auf ein zuvor aufgetragenes Material (5) und/oder ein Substrat (6) aufgebracht wird und aushärtet. Kennzeichnend ist, dass das geschmolzene Material (4) nach dem Aufbringen auf das zuvor aufgetragene Material (5) und/oder das Substrat (6) während des Aushärtens durch ein sich mit dem Druckkopf (2) bewegendes Formgebungselement (10) geführt und durch dieses umgeformt wird, sodass das geschmolzene Material (4) durch die Umformung in einem durch das Formgebungselement (10) vorgegebenen Profil (11) bereitgestellt wird.

## Beschreibung

Die Erfindung betrifft ein Verfahren zum dreidimensionalen Aufbringen eines Materials mittels einer Druckvorrichtung und eine zugehörige Druckvorrichtung zum dreidimensionalen Aufbringen eines Materials.

Aus dem Stand der Technik sind zahlreiche additive Fertigungsverfahren zum Auftragen von Materialien bekannt. Diese Fertigungsverfahren werden auch als dreidimensionale Druckverfahren bezeichnet. Vorliegend richtet sich das Interesse insbesondere auf das sogenannte FLM-Verfahren (FLM- fused layer manufacturing/modeling), welches als Strangextrusionsverfahren dadurch charakterisiert ist, dass aufgeschmolzene Bahnen eines Materials aus einer Düse einer Druckvorrichtung aufeinander abgelegt werden, um das dreidimensionale Objekt zu fertigen. Bei den aufgeschmolzenen Materialien kann es sich beispielsweise um Kunststoffe, Metalle oder Legierungen handeln. Das zu fertigende Bauteil entsteht somit durch ein schichtweise erfolgendes Auftragen des aufgeschmolzenen Materials entlang der Bahnen.

In Abhängigkeit von den Materialeigenschaften einer Schmelze des Materials formt sich das aufgetragene Material während eines Abkühlvorgangs aus und verfestigt sich. Die relevanten Materialeigenschaften umfassen beispielsweise die Oberflächenspannung, die Wärmeleitfähigkeit und die Viskosität der Schmelze. Während des Abkühlvorgangs wird die Form des aufgetragenen Materials unter anderem von der Schwerkraft, der Geometrie der angrenzenden Objekte und angrenzenden Strömungen während des Auftragevorgangs beeinflusst. Unter diesem Einfluss bilden sich Bahnen mit einem rundlichen Profil im Querschnitt, die jeweils eine Wulstform aufweisen. Die Wulstform der einzelnen Bahnen führt dazu, dass Oberflächen eines additiv gefertigten Objekts in der Regel entlang der Grenzflächen zwischen übereinander abgelegten Bahnen längliche Kerben aufweisen. Aufgrund dieser Kerben weisen additiv gefertigte Objekte ohne Nachbehandlung oft eine ungenügende Oberflächengüte auf.

Um die Oberflächengüte des additiv gefertigten Objekts zu verbessern, ist es verbreitet, Betriebsparameter des additiven Fertigungsverfahrens so einzustellen, dass Schichthöhen der einzelnen Bahnen möglichst gering gehalten werden. Mit abnehmenden Schichthöhen der Bahnen, nehmen auch die Tiefen der Kerben ab, wodurch die Oberflächengüte zunimmt. Dadurch kann sich jedoch die Dauer des Fertigungsverfahrens verlängern. Eine andere Lösung zur Änderung der Oberflächengüte besteht in einer Nachbearbeitung des additiv gefertigten Objekts. Die Nachbearbeitung umfasst hierbei in der Regel ein Schleifen und/oder Polieren einzelner Oberflächen des additiv gefertigten Objekts, um die Tiefe der Kerben zu verringern. Probleme bei der Nachbearbeitung ergeben sich aufgrund von Einschränkungen in der Zugänglichkeit einzelner Oberflächen. Diese können insbesondere bei geringen Abmessungen oder komplexeren Formen des Objekts auftreten. Zudem erhöht sich durch die teils manuell erfolgende Nachbearbeitung der Aufwand der Fertigung.

Es ist eine Aufgabe der Erfindung, ein Verfahren bereitzustellen, welches eine Reduzierung der Kerbentiefen bei additiv gefertigten Objekten ermöglicht.

Diese Aufgabe wird durch ein Verfahren sowie durch eine Druckvorrichtung mit den Merkmalen gemäß den unabhängigen Ansprüchen gelöst. Vorteilhafte Weiterbildungen der vorliegenden Erfindung sind in den abhängigen Ansprüchen angegeben.

Durch die Erfindung wird ein Verfahren zum dreidimensionalen Aufbringen eines Materials mittels einer Druckvorrichtung bereitgestellt. Während des Verfahrens wird das Material in einem Druckkopf geschmolzen und das geschmolzene Material aus einer Düse ausgegeben. Das geschmolzene Material wird bei einer Bewegung des Druckkopfs entlang einer Verfahrrichtung als Strang auf ein zuvor aufgetragenes Material und/oder ein Substrat aufgebracht. Es ist vorgesehen, dass das geschmolzene Material nach dem Aufbringen auf das zuvor aufgetragene Material und/oder das Substrat während des Aushärtens durch ein sich mit dem Druckkopf bewegendes Formgebungselement geführt und durch dieses umgeformt wird. Durch die Umformung wird das geschmolzene Material in einem durch das Formgebungselement vorgegebenes Profil gebracht.

Mit anderen Worten handelt es sich um ein additives Fertigungsverfahren, wobei in einem ersten Schritt das aufzutragende Material in einem Druckkopf geschmolzen wird. Bei dem Material kann es sich beispielsweise um ein thermoplastisches Material, wie beispielsweise einen Kunststoff handeln. Als Material kann auch ein Metall oder eine Legierung vorgesehen sein. Das Material kann vor dem Schmelzen in dem Druckkopf als Granulat oder Pulver vorliegen. Die durch das Schmelzen des Materials entstandene Schmelze wird durch die Düse ausgegeben. Das geschmolzene Material wird dadurch auf das bereits aufgetragene Material und/oder das Substrat aufgetragen. Während der Ausgabe des geschmolzenen Materials aus der Düse bewegt sich der Druckkopf entlang der Verfahrrichtung, sodass das geschmolzene Material als Strang aufgetragen wird. Nach dem Auftragen des geschmolzenen Materials kühlt dieses ab, wodurch ein Aushärten des Materials erfolgt. Das Material verfestigt sich während des Aushärtens von der Oberfläche aus in ein Zentrum. Solange das Material noch als Schmelze vorliegt, also noch nicht vollständig ausgehärtet ist, bewegt sich das Formgebungselement über den als Schmelze vorliegenden Abschnitt der Bahn, wodurch das geschmolzene Material durch das Formgebungselement geführt wird. Das Formgebungselement ist dazu vorgesehen, ein vorbestimmtes Profil in dem geschmolzenen Material durch Umformung des Materials bereitzustellen. Das Formgebungselement kann somit einer Matrix im Sinne der Umformtechnik entsprechen. Zur Bereitstellung des Profils kann das Formgebungselement einen Bereich, durch den das Material geführt wird, zumindest teilweise umschließen. Der Bereich kann mittels Innenwänden des Formgebungselements umschlossen und/oder begrenzt sein. Durch die Innenwände kann ein Profilumriss des bereitzustellenden Profils gebildet sein, durch welches das Profil aufgenommen werden kann. Das Profil kann ein Querschnitt quer zu der Verfahrrichtung sein. Das Material wird zur Bereitstellung des Profils während des Verfahrens durch das Formgebungselement umgeformt. Das Formgebungselement bewegt sich dabei mit der Düse mit, sodass die Umformung des aufgetragenen Materials nach dem Auftragen des Materials erfolgt. Die Umformung kann beispielsweise durch ein seitliches Berühren des aufgetragenen Materials durch das Formgebungselement erfolgen. Dadurch kann das geschmolzene Material beispielsweise umgeformt werden, um statt einer wulstförmigen Bahn, die zu den besagten Kerben führt, eine Bahn mit einem vorbestimmten oder beeinflussten Profil im Querschnitt zu bilden.

Durch die Erfindung ergibt sich der Vorteil, dass während der additiven Fertigung eine Auftragung des Materials mit dem vorgegebenen Profil erfolgt, wodurch die Oberflächengüte eines additiv erzeugten Objekts optimiert werden kann.

Die Erfindung umfasst auch Weiterbildungen, durch die sich weitere Vorteile ergeben.

Eine Weiterbildung der Erfindung sieht vor, dass das Formgebungselement unmittelbar an der Düse angeordnet ist. Mit anderen Worten ist das Formgebungselement formschlüssig und/oder materialschlüssig mit der Düse verbunden. Durch die Weiterbildung ergibt sich der Vorteil, dass geometrische Abmessungen der Druckvorrichtung reduziert werden können, weil keine separate Haltevorrichtung bereitgestellt werden muss. Es kann beispielsweise vorgesehen sein, dass das Formgebungselement eine Gestalt einer Krone aufweist, die um einen Ausgang der Düse angeordnet ist. Der Profilumriss des Formgebungselements kann durch eine vertikal ausgerichtete Platte und/oder eine seitlich abstehende Zacke bereitgestellt sein.

Eine Weiterbildung der Erfindung sieht vor, dass das Formgebungselement an einer Positioniereinrichtung der Druckvorrichtung angeordnet ist, die dazu eingerichtet ist, das Formgebungselement translatorisch und/oder rotatorisch bezüglich der Düse zu bewegen. Mit anderen Worten weist die Druckvorrichtung die Positioniereinrichtung auf, welche dazu eingerichtet ist, das Formgebungselement zu verschieben und/oder zu drehen, um dessen Ausrichtung bezüglich der Düse zu verändern. Dadurch ergibt sich der Vorteil, dass die Lage des Formgebungselements an die aktuelle Verfahrrichtung der Düse angepasst werden kann. Es kann beispielsweise vorgesehen sein, dass durch die Positioniereinrichtung eine Drehung des Formgebungselements erfolgt, wenn sich die Verfahrrichtung der Düse verändert.

Eine Weiterbildung der Erfindung sieht vor, dass durch eine Kühlvorrichtung der Druckvorrichtung während der Umformung Wärme von dem Formgebungselement abgeleitet wird. Mit anderen Worten wird das Formgebungselement während es das geschmolzene Material umformt durch die Kühlvorrichtung gekühlt. Dadurch ergibt sich der Vorteil, dass der Aushärtungsvorgang zumindest an einer durch das Formgebungselement kontaktierten Seite des Materials beschleunigt werden kann. Es kann beispielsweise vorgesehen sein, dass an dem Formgebungselement eine Flüssigkeitsleitung als Kühlvorrichtung angeordnet ist, durch die eine Kühlflüssigkeit geführt wird. Durch die Kühlflüssigkeit kann die bei der Kontaktierung des Materials durch das Formgebungselement aufgenommene Wärme aus dem Formgebungselement abgeführt werden. Hierdurch kann die Temperatur des Materials an einer Innenwand, an der sich das Formgebungselement und das Material berühren, gesenkt werden.

Eine Weiterbildung der Erfindung sieht vor, dass die Düse und/oder das Formgebungselement aus einer Keramik bestehen. Mit anderen Worten weisen die Düse und/oder das Formgebungselement eine Keramik auf. Dadurch ergibt sich der Vorteil, dass die Düse und/oder das Formgebungselement aus einem hitzebeständigen Material bestehen und somit durch die Wärme der Schmelze nicht umgeformt werden. Es kann beispielsweise vorgesehen sein, dass die Düse und/oder das Formgebungselement aus einer technischen Keramik bestehen, die eine erforderliche Hitzebeständigkeit aufweist. Es kann sich bei der Keramik beispielsweise um Siliziumcarbit oder Siliziumnitrit handeln.

Eine Weiterbildung der Erfindung sieht vor, dass ein Profilumriss des Formgebungselements zur Vorgabe des Profils durch zumindest eine parallel zu einer Düsenrichtung ausgerichtete Innenwand begrenzt. Mit anderen Worten weist eine den Profilumriss des Formgebungselements abgrenzende Innenwand einen Normalenvektor auf, der parallel zu einer Ausgaberichtung der Düse ausgerichtet ist, in der die Ausgabe des Materials erfolgt. Dadurch ergibt sich der Vorteil, dass die Oberflächengüte von horizontalen Seitenflächen erhöht werden kann. Es kann beispielsweise vorgesehen sein, dass die Ausgaberichtung des Materials aus der Düse in Richtung der Erdanziehung erfolgt. Die Ausgaberichtung kann somit vertikal ausgerichtet sein. Eine Innenwand des Formgebungselements kann eine Normale aufweisen, die parallel zu der Ausgaberichtung ausgerichtet ist. Die Innenwand kann somit horizontal ausgerichtet sein.

Eine Weiterbildung der Erfindung sieht vor, dass der Profilumriss des Formgebungselements zur Vorgabe des Profils durch zumindest eine quer zur Düsenrichtung ausgerichtete Innenwand begrenzt ist. Mit anderen Worten weist eine den Profilumriss des Formgebungselements abgrenzende Innenfläche einen Normalenvektor auf, der quer zu einer Ausgaberichtung der Düse ausgerichtet ist, in der die Ausgabe des Materials erfolgt. Die Ausgaberichtung kann somit parallel zu einem Tangentenvektor der Innenwand sein. Dadurch ergibt sich der Vorteil, dass die Oberflächengüte von vertikalen Seitenflächen erhöht werden kann. Es kann beispielsweise vorgesehen sein, dass die Ausgaberichtung des Materials aus der Düse in Richtung der Erdanziehung erfolgt. Die Ausgaberichtung kann somit vertikal ausgerichtet sein. Eine Innenwand des Formgebungselements kann eine Normale aufweisen, die quer zu der Ausgaberichtung ausgerichtet ist. Die Innenwand kann somit vertikal ausgerichtet sein.

Eine Weiterbildung der Erfindung sieht vor, dass das Formgebungselement ein L-Profil aufweist, wobei das Formgebungselement zumindest zwei Innenwände umfasst, die einen Winkel von 85 Grad bis 95 Grad einschließen. Mit anderen Worten weist das Formgebungselement zwei Innenwände auf, die in einem Winkel von 85 Grad bis 95 Grad zueinander angeordnet sind. Durch die Weiterbildung ergibt sich der Vorteil, dass sowohl eine Seitenfläche des Profils mit horizontaler Ausrichtung als auch eine Seitenflächen des Profils mit vertikaler Ausrichtung durch das Formgebungselement geformt werden können. Es kann beispielsweise vorgesehen sein, dass eine der Innenwände des Formgebungselements horizontal ausgerichtet ist und eine der Innenwände des Formgebungselements vertikal ausgerichtet ist, wobei die beiden Innenwände entlang einer Kante aneinander angrenzen und beispielsweise einen Winkel von 90 Grad einschließen. In diesem Fall kann beispielsweise eine Bereitstellung eines quadratischen Profils in der aufgetragenen Bahn ermöglicht sein.

Eine Weiterbildung der Erfindung sieht vor, dass zumindest eine der Innenwände des Formgebungselements eine quer zur Verfahrrichtung verlaufende, periodische Unebenheit aufweist. Mit anderen Worten ist zumindest eine Innenwand des Formgebungselements mit der periodischen Unebenheit strukturiert, wobei die Struktur entlang einer quer zu der Verfahrrichtung verlaufenden Richtung periodisch ist. Durch die Weiterbildung ergibt sich der Vorteil, dass eine Bahn mit einer strukturierten Oberfläche bereitgestellt werden kann. Es kann beispielsweise vorgesehen sein, dass eine horizontal ausgerichtete Innenwand des Formgebungselements eine geriffelte Struktur aufweist, sodass die Oberfläche des aufgetragenen Materials ebenfalls geriffelt ist. Eine auf der geriffelten Oberfläche einer Bahn aufgetragene weitere Bahn kann aufgrund der unebenen Oberfläche besser auf dem bereits aufgetragenen Material haften als eine ebene Oberfläche.

Eine Weiterbildung der Erfindung sieht vor, dass der Profilumriss des Formgebungselements zumindest eine konvexe Ausbuchtung aufweist. Mit anderen Worten weist das Formgebungselement eine in den Bereich der Schmelze hineinragende Ausbuchtung auf. Dadurch ergibt sich der Vorteil, dass in dem Material die Form des Querschnitts mit einer Einbuchtung bereitgestellt werden kann. Es kann beispielsweise vorgesehen sein, dass eine rechteckige Fläche oder ein rechteckiges Volumen aus einer der Platten des Formgebungselements in den Raum hineinragt, durch den das geschmolzene Material während des Verfahrens geführt wird. Dadurch wird durch die konvexe Ausbuchtung während des Verfahrens in dem Profil des Materials eine konkave Einbuchtung generiert, welche sich entlang der Verfahrrichtung über die Bahn erstreckt.

Eine Weiterbildung der Erfindung sieht vor, dass der Profilumriss des Formgebungselements zumindest eine konkave Einbuchtung aufweist. Mit anderen Worten weist das Formgebungselement in seinem Querschnitt zumindest eine Ausnehmung auf. Dadurch ergibt sich der Vorteil, dass durch das Formgebungselement das Profil des Materials mit einer konvexen Ausbuchtung bereitgestellt werden kann. Es kann beispielsweise vorgesehen sein, dass ein Prisma mit einer dreieckigen Grundfläche aus einer der Platten des Formgebungselements ausgenommen ist. Während der Durchführung des Verfahrens kann geschmolzenes Material durch die Einbuchtung geführt werden, und hierdurch das Profil mit einer konvexen Ausbuchtung bereitgestellt werden. Die hiermit erzeugte konvexe Ausbuchtung kann als Prisma entlang der Verfahrrichtung der Düse verlaufen. Eine Weiterbildung der Erfindung sieht vor, dass durch den Profilumriss des Formgebungselements ein Doppel-T-Profil umschlossen wird. Mit anderen Worten wird durch die Innenwände des Formgebungselements ein Doppel-T-Profil begrenzt. Dadurch ergibt sich der Vorteil, dass ein Doppel-T-Profil in dem aufgetragenen Material bereitgestellt werden kann. Es kann beispielsweise vorgesehen sein, dass durch das Formgebungselement das Doppel-T-Profil bis auf eine Seite umschlossen ist. Die Seite kann beispielsweise eine untere Seite des Doppel-T-Profils sein, die in Richtung der Grenzfläche zeigt und horizontal verläuft.

Eine Weiterbildung der Erfindung sieht vor, dass durch den Profilumriss des Formgebungselements ein U-Profil umschlossen wird. Mit anderen Worten wird durch die Innenwände des Formgebungselements ein U-Profil begrenzt. Dadurch ergibt sich der Vorteil, dass ein U-Profil in dem aufgetragenen Material bereitgestellt werden kann. Es kann beispielsweise vorgesehen sein, dass durch das Formgebungselement das U-Profil bis auf zwei Seiten umschlossen ist. Eine der zwei Seiten kann beispielsweise eine untere Seite des U-Profils sein, die in Richtung der Grenzfläche zeigt und horizontal verläuft. Die andere Seite kann vertikal ausgerichtet sein.

Eine Weiterbildung der Erfindung sieht vor, dass durch die Druckvorrichtung ein erstes Material aufgetragen wird, das das U-Profil als Profil aufweist, und in eine Öffnung des U-Profils ein zweites Material aufgetragen wird. Mit anderen Worten erfolgt eine Auftragung des ersten Materials, wobei durch die Druckvorrichtung eine Bahn mit einem U-Profil als Profil bereitgestellt wird. Auf das bereits aufgetragene Profil aus dem ersten Material wird durch die Druckvorrichtung das zweite Material aufgetragen. Die Auftragung des zweiten Materials erfolgt dabei in die Öffnung des U-Profils. Durch die Weiterbildung ergibt sich der Vorteil, dass beispielsweise elektrische Leiterbahnen bereitgestellt werden können. Es kann beispielsweise vorgesehen sein, dass das erste Material ein elektrischer Isolator ist, der entlang einer Bahn mit einem U-Profil aufgetragen wird. In das U-Profil kann ein elektrisch leitendes Material wie Kupfer als das zweite Material aufgetragen werden. Durch ein erneutes Auftragen des ersten Materials kann das zweite Material durch das erste Material umschlossen werden.

Die Erfindung umfasst auch die Druckvorrichtung zum dreidimensionalen Aufbringen eines Materials. Die Druckvorrichtung dient zum dreidimensionalen Aufbringen eines Materials. Die Druckvorrichtung umfasst einen beheizten Druckkopf zum Schmelzen des Materials und zum Ausgeben des geschmolzenen Materials. Darüber hinaus ist der Druckkopf dazu ausgebildet, bei einer Bewegung des Druckkopfs das geschmolzene Material als Strang auf ein zuvor aufgetragenes Material und/oder ein Substrat aufzutragen, wobei das aufgetragene Material aushärtet. Die Druckvorrichtung ist dazu eingerichtet, das geschmolzene Material nach dem Aufbringen auf das zuvor aufgetragene Material und/oder das Substrat während des Aushärtens durch ein sich mit dem Druckkopf bewegendes Formgebungselement zu führen und durch dieses umzuformen. Die Druckvorrichtung ist dazu eingerichtet, das geschmolzene Material durch die Umformung in einem durch das Formgebungselement vorgegebenen Profil bereitzustellen.

Die Druckvorrichtung kann zu dem einen Antrieb aufweisen, mit dem der Druckkopf entlang einer vorbestimmten Verfahrrichtung bewegt werden kann. Auf diese Weise kann das aufgeschmolzene Material entlang der Verfahrrichtung aufgetragen werden. Die Anwendbarkeit auf alle möglichen Achsysteme und/oder Maschinenkonfigurationen ist möglich, da der Druckkopf weitestgehend unabhängig von der Maschinenthematik beziehungsweise der Ausgestaltung des Antriebs ist.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung einer Druckvorrichtung zum dreidimensionalen Aufbringen eines Materials gemäß dem Stand der Technik;
- FIG 2: eine schematische Darstellung einer Druckvorrichtung mit einem Formgebungselement;
- FIG 3: eine schematische Darstellung einer Druckvorrichtung mit einem Formgebungselement mit Sicht auf ein Profil;
- FIG 4: eine schematische Darstellung einer Druckvorrichtung mit einem Formgebungselement mit Sicht auf ein weiteres Profil;
- FIG 5: eine schematische Darstellung von U-Formen; und
- FIG 6: eine schematische Darstellung eines Ablaufs eines Verfahrens zum dreidimensionalen Aufbringen eines Materials.

In den Figuren werden gleiche oder funktionsgleiche Elemente mit den gleichen Bezugszeichen versehen.

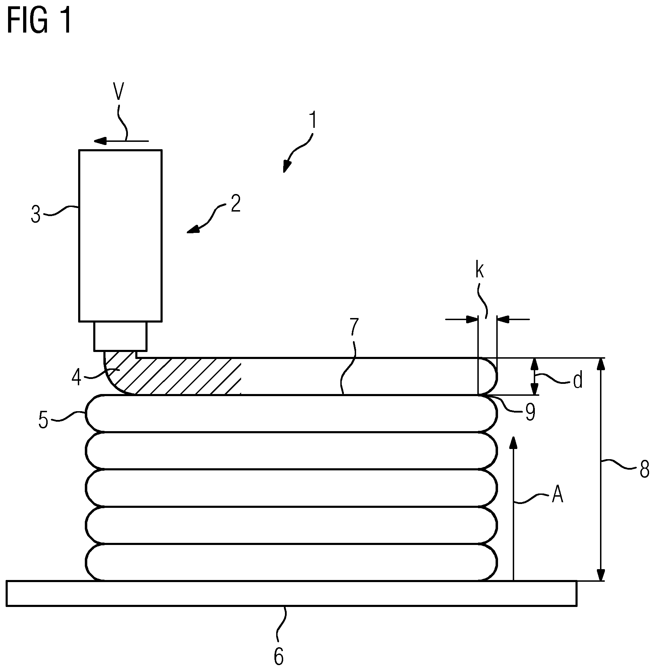

FIG 1 zeigt eine schematische Darstellung einer Druckvorrichtung 1 gemäß dem Stand der Technik. Mit dieser Druckvorrichtung 1 kann das sogenannte FLM-Verfahren durchgeführt werden. Die Druckvorrichtung 1 umfasst einen Druckkopf 2, welcher eine beheizte Düse 3 aufweist. Dieser Düse 3 kann ein Material, beispielsweise in Form eines Filaments, zugeführt werden. Mittels der Düse 3 kann dann das Material erwärmt und geschmolzen werden. Auf diese Weise kann mittels der Düse 3 ein geschmolzenes Material 4 ausgeben werden. Dabei wird das geschmolzene Material 4 als Strang beziehungsweise als Bahn ausgegeben. Das geschmolzene Material 4 wird dabei auf ein zuvor aufgetragenes Material 5 aufgetragen, welches zumindest teilweise erstarrt ist. Zu Beginn des Verfahrens wird das Material auf ein Substrat 6 aufgetragen. Danach werden mehrere Schichten beziehungsweise Bahnen übereinander entlang einer Aufbaurichtung A aufgetragen. Die jeweiligen Bahnen weisen eine Dicke d auf, wobei die Dicke d der jeweiligen Bahnen gleich ist. Der Druckkopf 2 wird mittels eines hier nicht dargestellten Antriebs entlang einer Verfahrrichtung V bewegt. Das geschmolzene Material 4 wird aus der Düse 3 auf das zuvor aufgetragene Material 5 aufgetragen. Dabei bildet sich zwischen beiden Bahnen eine Grenzschicht 7. Aufgrund der wulstförmigen Gestalt der einzelnen Bahnen bilden sich an einer Oberfläche 8, die parallel zu der Aufbaurichtung A ausgerichtet ist, einzelne Kerben 9. Die Kerben 9 weisen eine jeweilige Kerbentiefe k auf. Die Kerbentiefen k können von der Oberflächenspannung des geschmolzenen Materials abhängig sein. Um die Kerbentiefe k an der Oberfläche 8 zu verringern, ist es nach dem Stand der Technik üblich, die Dicke d der Bahnen zu reduzieren. Alternativ dazu ist es verbreitet, die Oberfläche 8 nach dem Auftragen zu schleifen oder zu polieren, um eine glatte Oberfläche 8 zu erhalten. Ein weiteres Problem ergibt sich nach dem Stand der Technik aus der Beschaffenheit der Grenzschichten 7. Die Grenzschichten 7 verlaufen in der Regel geradlinig und bilden eine plane Ebene. Dadurch sind die einzelnen Bahnen, die sich an einer jeweiligen Grenzschicht 7 treffen in einem nicht ausreichenden Umfang miteinander verzahnt, sodass additiv gefertigte Körper anisotrope mechanische Eigenschaften aufweisen können.

Bei vielen Verfahren der additiven Fertigung wird Material aufgeschmolzen. Gemäß den Materialeigenschaften der Schmelze wie Oberflächenspannung, Wärmeleitfähigkeit, Viskosität und den Umgebungsbedingungen wie Schwerkraft, Geometrie der angrenzenden Objekte, angrenzende Strömungen usw. formt sich das Material beim Abkühlen / Verfestigen. Die dabei entstehende Form bestimmt die letztlich am Werkstück festzustellende Oberflächengüte und Genauigkeit. Bei genau diesen Eigenschaften besteht bei allen Verfahren der Additiven Fertigung der Wunsch diese zu verbessern oder spezielle Eigenschaften zu erzielen.

Bisher wird versucht auf die Ausformung der Schmelze Einfluss zu nehmen indem die Schichthöhen möglichst klein gewählt werden. Daraus resultieren dann kleinere "Kerben" in der Oberfläche. Auch ist aus der Bauindustrie bekannt das flüssige Betonmasse direkt beim Auftragen in eine Form gebracht werden die der gewünschten Endform entspricht. Auch werden heute Profile aus den Materialien Aluminium oder Kunststoff direkt erzeugt indem sie durch eine entsprechende Negativform gepresst werden.

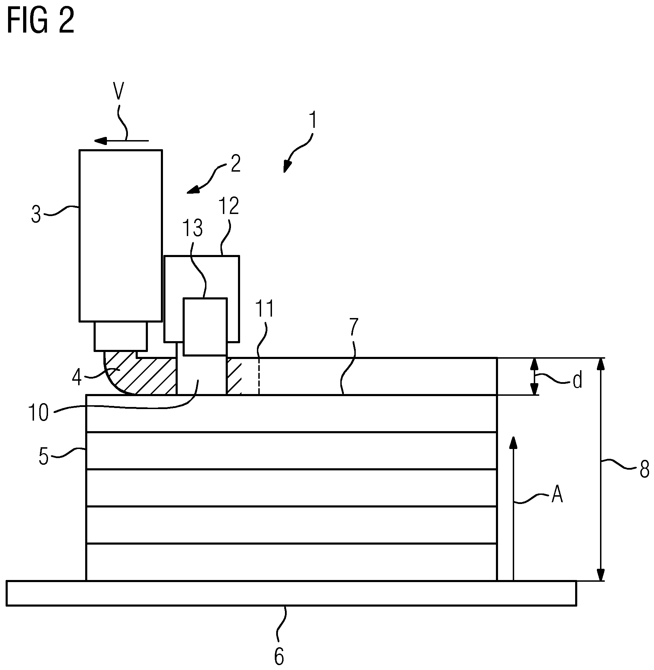

FIG 2 zeigt eine schematische Darstellung einer Druckvorrichtung 1. Die gezeigte Druckvorrichtung 1 kann, wie die in FIG 2 gezeigte Druckvorrichtung 1 nach dem Stand der Technik, zur Durchführung des FLM-Verfahrens eingerichtet sein. Die Druckvorrichtung 1 kann einen Druckkopf 2 mit einer beheizten Düse 3 aufweisen. Die Düse 3 kann dazu eingerichtet sein, ein Material, welches als Pulver, Granulat oder Filament vorliegen kann, zu schmelzen und auf eine bereits aufgetragene Bahn 5 oder ein Substrat 6 aufzutragen. Das geschmolzene Material 4 kann während einer Fortbewegung der Düse 3 entlang einer Verfahrrichtung V ausgegeben werden. Somit kann das geschmolzene Material 4 als länglicher Strang auf das zuvor aufgetragene Material 5 aufgetragen werden. Die Druckvorrichtung 1 kann ein Formgebungselement 10 aufweisen, welches so angeordnet sein kann, dass das geschmolzene Material 4 während des Verfahrens entlang der Verfahrrichtung V durch das Formgebungselement 10 geführt wird. Während sich das Formgebungselement 10 über das geschmolzene Material 4 bewegt, kann das geschmolzene Material 4 durch das Formgebungselements 10 umgeformt werden, sodass ein durch das Formgebungselement 10 bestimmtes Profil 11 in einem Querschnitt des geschmolzenen Materials 4 bereitgestellt werden kann. Bei dem Formgebungselement 10 kann es sich somit um eine Matrix ("Mutterform") im umformtechnischen Sinne handeln. Durch das Formgebungselement 10 kann ein geschlossener oder offener Profilumriss bereitgestellt sein, durch den das in dem Material bereitzustellendes Profil 11 begrenzt wird. Die Begrenzung kann durch Innenwände des Formgebungselements 10 gegeben sein. Es kann vorgesehen sein, dass die Druckvorrichtung 1 eine Positioniereinrichtung 12 aufweist, welche dazu eingerichtet ist, dass Formgebungselement 10 bezüglich der Düse 3 translatorisch oder rotatorisch zu bewegen. Es kann beispielsweise vorgesehen sein, dass das Formgebungselement 10 durch die Positioniereinrichtung 12, um die Düse 3 gedreht wird, wenn sich die Verfahrrichtung V der Düse 3 verändert, sodass sichergestellt wird, dass das geschmolzene Material 4 durch das Formgebungselement 10 geführt wird. Um die Geschwindigkeit des Aushärtens des geschmolzenen Materials 4 zu erhöhen, kann es vorgesehen sein, dass an dem Formgebungselement 10 eine Kühlvorrichtung 13 angeordnet ist, welches dazu eingerichtet ist, durch das Formgebungselement 10 aufgenommene Wärme abzuführen. Die Düse 3 und das Formgebungselement 10 können beispielsweise aus einer hitzebeständigen Keramik bestehen. Das Formgebungselement 10 kann Innenwände 14, 15 aufweisen, die den Profilumriss abgrenzen. Die Innenwände 14, 15 können parallel zur Verfahrrichtung V der Düse 3 ausgerichtet sein. Die Innenwand 15 kann vertikal ausgerichtet sein, sodass sie den Profilumriss vertikal beschränkt. Hierdurch kann eine vertikale Seite des vorgegebenen Profils 11 festgelegt sein. Dadurch ist es beispielsweise möglich, einen quadratischen Querschnitt als vorgegebenes Profil 11 bereitzustellen, wodurch die Kerbentiefen k reduziert werden können. Hierdurch kann es möglich sein, die Oberflächengüte der Oberfläche 8, welche entlang der Aufbaurichtung ausgerichtet ist, zu erhöhen.

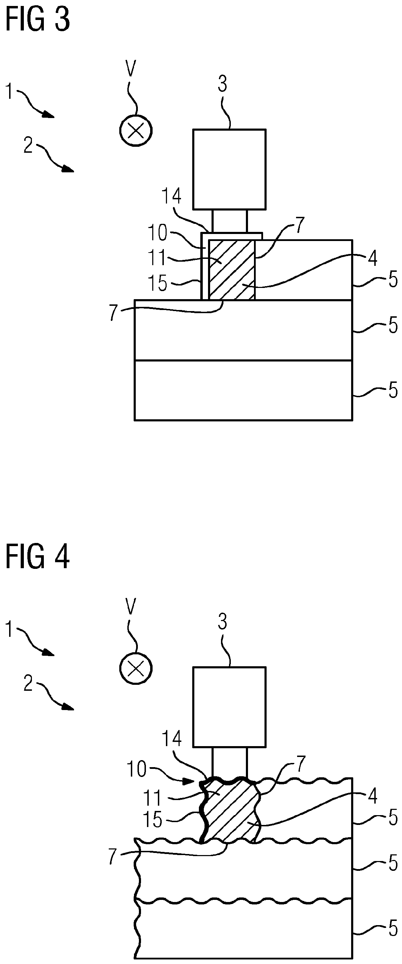

FIG 3 zeigt die in FIG 2 dargestellte Druckvorrichtung 1. Die Sicht verläuft dabei entlang der Verfahrrichtung V des Drucckopfs 2. Gezeigt ist das Formgebungselement 10, durch welches das geschmolzene Material 4 geführt wird, damit das vorbestimmte Profil 11 bereitgestellt wird. Das Formgebungselement 10 kann eine horizontale Innenwand 14 und eine vertikale Innenwand 15 aufweisen. Die horizontale Innenwand 14 und die vertikale Innenwand 15 können in einer L-Form ausgerichtet sein und beispielsweise einen Winkel von 90° einschließen. Durch die horizontale Innenwand 14 kann der Profilumriss in Richtung der Düse 3 begrenzt sein, wodurch eine Oberseite des Profils 11 vorgegeben sein kann. Das geschmolzene Material 4 kann hierdurch an der Oberseite des Profils 11, welche die spätere Grenzschicht 7 zu einer später aufgetragenen Bahn darstellen kann, geformt. Die vertikale Innenwand 15 kann den Profilumriss vertikal begrenzen und somit eine vertikale Seite des Profils 11 vorgeben. Das Profil 11 wird auf einer Unterseite an der Grenzschicht durch das bereits aufgetragene Material 5 bzw. das Substrat 6 begrenzt. Eine Seite des Profils 11 gegenüber der vertikalen Innenwand 15 kann durch bereits aufgetragenes Material 5 begrenzt sein. Durch die vertikale Innenwand 15 und die horizontale Innenwand 14 kann ein Druck auf das geschmolzene Material 4 ausgeübt werden, sodass es formschlüssig an dem bereits aufgetragenen Material 5 aushärten kann.

FIG 4 eine schematische Darstellung einer Druckvorrichtung mit einem Formgebungselement mit Sicht auf ein weiteres Profil. Das Formgebungselement kann die zwei Innenwände 14, 15 aufweisen, durch die der Profilumriss an zwei Seiten gebildet sein kann. Die zwei Innenwände 14, 15 können jeweils eine unebene periodische Struktur aufweisen. Die Periodizität kann entlang einer Querrichtung zu der Verfahrrichtung V vorliegen. Die Unebenheit kann beispielsweise als Sinusverlauf oder einer Zackenstruktur vorliegen. In dem durch das Formgebungselement 10 geführte, geschmolzene Material 4 kann somit ein Profil 11 mit unebenen Seiten bereitgestellt werden.

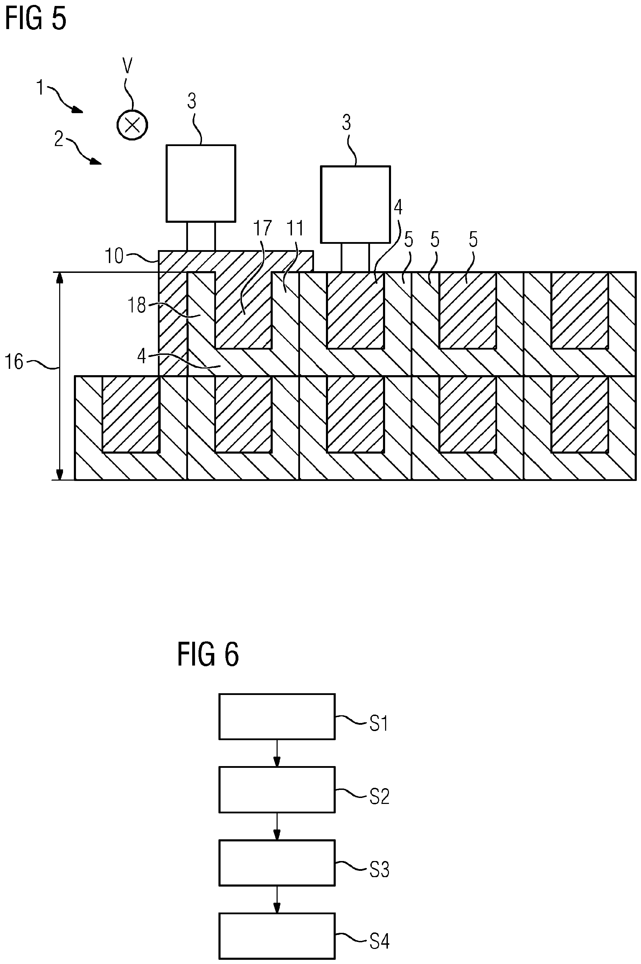

FIG 5 zeigt eine schematische Darstellung von U-Formen. Die Profile 11 können beispielsweise eine Wicklung 16 bilden. Die Profile 11 mit den U-Formen können aus einem ersten Material bestehen, welches elektrisch isolierend ist. Um die U-Form in dem Querschnitt 11 bereitstellen zu können, kann das Formgebungselement 10 die horizontalen Innenwände 14 und die vertikalen Innenwände 15 aufweisen, sodass das Formgebungselement 10 konvexe Bereiche 17 und konkave Bereiche 18 aufweist. Durch die Innenwände 14, 15 kann der Profilumriss begrenzt sein, sodass dieser bis auf eine vertikale Seite und eine horizontale Seite das Negativ der U-Form darstellt. Durch die Druckvorrichtung 1 kann während des Verfahrens eine Auftragung der Bahnen mit der U-Form als Profil 11 aus dem ersten Material erfolgen. Ist die Bahn aus dem ersten Material aufgetragen und ausgehärtet, wird ein weiteres Druckverfahren durchgeführt. In das bereits aufgetragene Material 5 kann dabei ein zweites Material aus einem leitenden Material aufgetragen werden. Die Auftragung kann durch eine weitere oder dieselbe Düse 3 wie für das erste Material erfolgen. Das zweite Material kann in einer durch die U-Form gebildeten Rille eingetragen werden. Dabei kann es in eine Öffnung der U-Form als geschmolzenes Material 4 aufgetragen werden.

FIG 6 zeigt eine schematische Darstellung eines Ablaufs eines Verfahrens zum dreidimensionalen Aufbringen eines Materials. Das Verfahren kann durchgeführt werden, um ein Objekt mit vorbestimmten Abmessungen zu fertigen. In einem ersten Schritt S1 kann das Material, aus dem das Objekt gefertigt werden soll, in einem Druckkopf 2 der Druckvorrichtung 1 geschmolzenen werden.

In einem Schritt S2 kann das geschmolzene Material 4 aus der Düse 3 der Druckvorrichtung 1 ausgegeben werden. Die Düse 3 kann während der Ausgabe so ausgerichtet sein, dass das geschmolzene Material 4 in Richtung des Erdmittelpunktes ausgegeben wird. Das geschmolzene Material 4 trifft nach der Ausgabe aus der Düse 3 auf das Substrat 6 oder ein zuvor aufgetragenes Material 5.

In einem weiteren Schritt S3 beginnt das geschmolzene Material 4 abzukühlen und dabei auszuhärten. Die Düse 3 wird entlang der Verfahrrichtung V bewegt, wobei weiterhin geschmolzenes Material 4 ausgegeben wird. Mit der Düse 3 kann sich auch das Formgebungselement 10 bewegen, sodass das geschmolzene Material 4 durch das Formgebungselement 10 geführt werden kann. Durch die Innenwände 14,15 des das Formgebungselements 10 kann ein Profilumriss bereitgestellt sein. Die Innenwände 14,15 können das geschmolzene Material 4 berühren, sodass das geschmolzene Material 4 durch das Formgebungselement 10 derart umgeformt wird, dass es einen durch den Profilumriss definiertes Profil 11 aufweisen kann. Eine Geschwindigkeit der Bewegung der Druckvorrichtung 1 kann abhängig sein von einer Aushärtungseigenschaft des geschmolzenen Materials 4. Um das Aushärten des geschmolzenen Materials 4 beschleunigen zu können, kann es vorgesehen sein, dass das Formgebungselement 10 mittels einer Kühlvorrichtung 13 gekühlt wird. Wenn sich die Verfahrrichtung V der Düse 3 verändert, kann es vorgesehen sein, dass die Ausrichtung des Formgebungselements 10 durch die Positioniereinrichtung 12 verändert wird.

In einem Schritt S4 kann das geschmolzene Material 4 das Formgebungselement 10 verlassen, sodass es mit dem vorgegebenen Profil 11 aushärten kann.

Diese Erfindungsmeldung schlägt vor die Schmelze durch ein entsprechendes Profil in eine vorteilhafte Form zu bringen, während die Schmelze erstarrt. Eine vorteilhafte Form kann ein rechteckiger Querschnitt sein um z.B. die Rillen an einer senkrechten Wand zu vermeiden (siehe FIG 1). Für spezielle Anwendungsfälle kann eine vorteilhafte Form, zum Beispiel eine U-Form als Profil 11 vorgesehen sein. In das U aus nichtleitendem Material kann ein leitendes Material eingebracht werden. So können direkt isolierte Leiterbahnen, beispielsweise in Form von Spulen oder einer Wicklung 16 gedruckt werden (siehe FIG 5). Eine andere vorteilhafte Form könnte eine Riffel-Form sein (siehe FIG 4). Damit kann die Oberfläche für eine weitere Nutzung vergrößert werden. Im Speziellen kann die Haftung zwischen den Strängen verbessert werden.

Durch die Idee wird es einerseits möglich phänomenologische Eigenschaften zu verbessern als auch andererseits funktionalen Druck zu erzeugen.

Insgesamt wird durch die Erfindung ein additives Fertigungsverfahren um Extrusionsverfahrensschritte ergänzt, um die Oberflächengüte zu erhöhen.

## Patentansprüche

1. Verfahren zum dreidimensionalen Aufbringen eines Materials mittels einer Druckvorrichtung (1), bei welchem das Material in einem Druckkopf (2) geschmolzen wird und das geschmolzene Material (4) aus einer Düse (7) ausgeben wird, wobei das geschmolzene Material (4) bei einer Bewegung des Druckkopfs (2) entlang einer Verfahrrichtung (V) als Strang auf ein zuvor aufgetragenes Material (5) und/oder ein Substrat (6) aufgebracht wird und aushärtet,
**dadurch gekennzeichnet, dass**
das geschmolzene Material (4) nach dem Aufbringen auf das zuvor aufgetragene Material (5) und/oder das Substrat (6) während des Aushärtens durch ein sich mit dem Druckkopf (2) bewegendes Formgebungselement (10) geführt und durch dieses umgeformt wird, sodass
das geschmolzene Material (4) durch die Umformung in einem durch das Formgebungselement (10) vorgegebenen Profil (11) bereitgestellt wird.

2. Verfahren nach Anspruch 1, **dadurch gekennzeichnet, dass**
das Formgebungselement (10) unmittelbar an der Düse (3) angeordnet ist.

3. Verfahren nach einem der vorhergehenden Ansprüche, **dadurch gekennzeichnet, dass**
das Formgebungselement (10) an einer Positioniereinrichtung (12) angeordnet ist, die dazu eingerichtet ist, das Formgebungselement (10) translatorisch und/oder rotatorisch bezüglich der Düse (3) zu bewegen.

4. Verfahren nach einem der vorhergehenden Ansprüche, **dadurch gekennzeichnet, dass** durch eine Kühlvorrichtung (13) des Formgebungselements (10) während der Umformung Wärme von dem Formgebungselement (10) abgeleitet wird.

5. Verfahren nach einem der vorhergehenden Ansprüche, **dadurch gekennzeichnet, dass**
die Düse (3) und/oder das Formgebungselement (10) aus einer Keramik besteht.

6. Verfahren nach einem der vorhergehenden Ansprüche, **dadurch gekennzeichnet, dass**
ein Profilumriss des Formgebungselements (10) zur Vorgabe des Profils (11) durch zumindest eine parallel zu einer Düsenrichtung ausgerichtete Innenwand (15) begrenzt ist.

7. Verfahren nach einem der vorhergehenden Ansprüche, **dadurch gekennzeichnet, dass**
der Profilumriss des Formgebungselements (10) zur Vorgabe des Profils (11) durch zumindest eine quer zur Düsenrichtung ausgerichtete Innenwand (14) begrenzt ist.

8. Verfahren nach Anspruch 7 mit dessen Rückzug auf Anspruch 6, **dadurch gekennzeichnet, dass**
das Formgebungselement (10) eine L-Form aufweist, wobei zwei der Innenwände (14,15) des Formgebungselements (10) einen Winkel von 85 Grad bis einschließlich 95 Grad einschließen.

9. Verfahren nach einem der Ansprüche 6 bis 8, **dadurch gekennzeichnet, dass**
zumindest eine der Innenwände (14,15) des Formgebungselements (10) eine quer zur Verfahrrichtung (V) verlaufenden, periodischen Unebenheit aufweist.

10. Verfahren nach einem der vorhergehenden Ansprüche,
**dadurch gekennzeichnet, dass**
der Profilumriss des Formgebungselements (10) zumindest eine konvexe Ausbuchtung (17) aufweist.

11. Verfahren nach einem der vorhergehenden Ansprüche,
**dadurch gekennzeichnet, dass**
der Profilumriss des Formgebungselements (10) zumindest eine konkave Einbuchtung (18) aufweist.

12. Verfahren nach einem der vorhergehenden Ansprüche,
**dadurch gekennzeichnet, dass**
durch den Profilumriss des Formgebungselements (10) eine U-Form umschlossen wird.

13. Verfahren nach Anspruch 7 mit dessen Rückzug auf Anspruch 6, **dadurch gekennzeichnet, dass**
durch den Profilumriss des Formgebungselements (10) eine Doppel-T-Form umschlossen wird.

14. Verfahren nach einem der vorhergehenden Ansprüche,
**dadurch gekennzeichnet, dass** durch die Druckvorrichtung (1) ein erstes Material mit der U-Form als Profil (11) aufgetragen wird, und
in eine Öffnung des U-Profils ein zweites Material aufgetragen wird.

15. Druckvorrichtung (1) zum dreidimensionalen Aufbringen eines Materials, umfassend
- einen beheizten Druckkopf (2) zum Schmelzen des Materials und zum Ausgeben des geschmolzenen Materials (4),
- wobei der Druckkopf (2) dazu ausgebildet ist, bei einer Bewegung des Druckkopfs (2) entlang einer Verfahrrichtung (V) das geschmolzene Material (4) als Strang auf ein zuvor aufgetragenes Material (5) und/oder ein Substrat (6) aufzutragen,
**dadurch gekennzeichnet, dass**
die Druckvorrichtung (1) dazu eingerichtet ist, das geschmolzene Material (4) nach dem Aufbringen auf das zuvor aufgetragene Material (5) und/oder das Substrat (6) während des Aushärtens durch ein sich mit dem Druckkopf (2) bewegendes Formgebungselement (10) zu führen und durch dieses umzuformen, sodass
die Druckvorrichtung (1) dazu eingerichtet ist, das geschmolzene Material (4) durch die Umformung in einem durch das Formgebungselement (10) vorgegebenen Profil (11) bereitzustellen.
